Europäisches Patentamt

European Patent Office

Office européen des brevets

(11) Publication number: **0 323 541 B1**

# EUROPEAN PATENT SPECIFICATION

(45) Date of publication of patent specification: **16.06.93**  (51) Int. Cl.⁵: **C08J 5/06**

(21) Application number: **88101225.6**

(22) Date of filing: **28.01.88**

(54) **Rigid composite.**

(43) Date of publication of application:
**12.07.89 Bulletin 89/28**

(45) Publication of the grant of the patent:
**16.06.93 Bulletin 93/24**

(84) Designated Contracting States:
**CH DE ES FR GB IT LI NL SE**

(56) References cited:
**EP-A- 0 191 680**
**US-A- 4 418 164**
**US-A- 4 522 871**
**US-A- 4 678 821**

(73) Proprietor: **E.I. DU PONT DE NEMOURS AND
COMPANY
1007 Market Street
Wilmington Delaware 19898(US)**

(72) Inventor: **Miner, Louis Henry
204 Winding Lane East Marlboro
Kennett Square Pennsylvania 19348(US)**
Inventor: **Zahr, George Elias
210 Sunset View Drive
Glen Mills Pennsylvania 19342(US)**

(74) Representative: **Abitz, Walter, Dr.-Ing. et al
Abitz, Morf, Gritschneder, Freiherr von Wittgenstein Postfach 86 01 09
W-8000 München 86 (DE)**

EP 0 323 541 B1

**Description**

Mumford et al. described the use of Kevlar 49[R] in filament wound pressure vessels in an article from the AIAA/SAE/ASME 18th Joint Propulsion Conference, June 21-23, 1982, Cleveland, Ohio. For such application, the filaments are ordinarily embedded in an epoxy resin matrix. The article suggested that a higher fraction of the fiber ultimate strength can be utilized by coating the fiber with from 5 to 9% of a silicone release agent before embedment in the epoxy resin.

United States Patent Number 4,678,821, issued July 7, 1987 discloses improved filament wound pressure vessels wherein the epoxy-embedded filaments are coated by 2-perfluoroalkylethyl esters or paraffin wax instead of silicone release agents.

Walling, in a paper entitled S-2 Glass Fiber: Its Role in Military Applications, for the Proceedings of the Fifth International Conference on Composite Materials (ICCM-V), San Diego, CA (July 29, 30, August 1, 1985), discloses glass fiber as useful in ballistics composites at elevated areal densities.

US-A-4 522 871 describes ballistics structures comprising multiple layers of para-aramid fibers impregnated by resorcinol-formaldehyde matrix resin.

The present invention provides a rigid composite of significantly improved ballistics performance, lighter weight, and reduced areal density for a given ballistics performance level.

## SUMMARY OF THE INVENTION

A rigid composite comprising a polyester, phenolic, or polyamide resin matrix reinforced with continuous p-aramid filaments coated with from about 0.2 to 5 percent, by weight, of a solid adhesion modifier, said coated filaments, when embedded in a polyester, phenolic, or polyamide resin matrix and tested in accordance with MIL-STD-662D (19 March 1984), exhibit a ballistics limit between about 305-1220 m/s (1000 and 4000 feet per second) and a composite areal density from about 1.95 - 29.3 kg/m$^2$ (0.4 to 6 pounds per square foot).

The solid adhesion modifier is, preferably, a 2-perfluoroalkylethyl ester or paraffin wax or a combination of those materials. The composite, generally, comprises from about 50 to 90 percent, by weight, filaments and is, preferably, from about 60 to 85 percent, by weight, filaments.

## BRIEF DESCRIPTION OF THE DRAWING

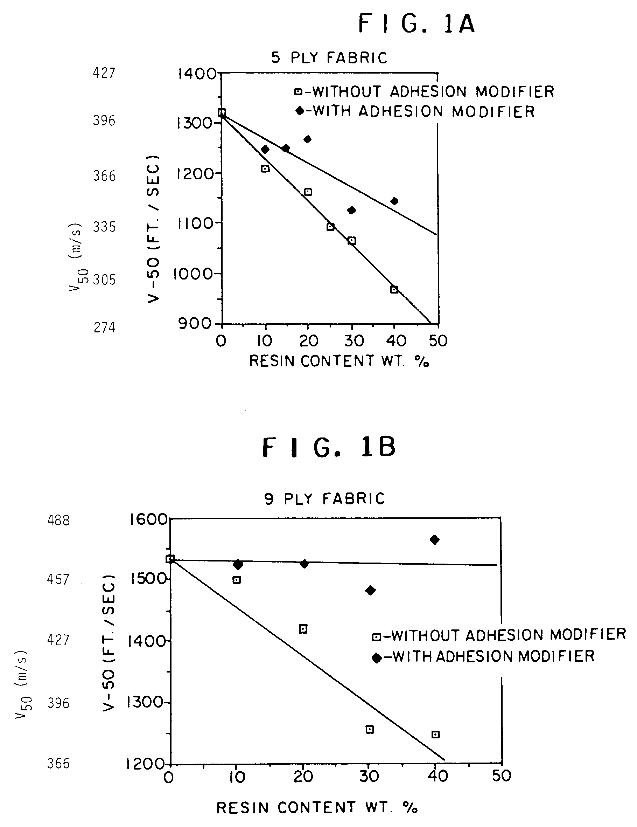

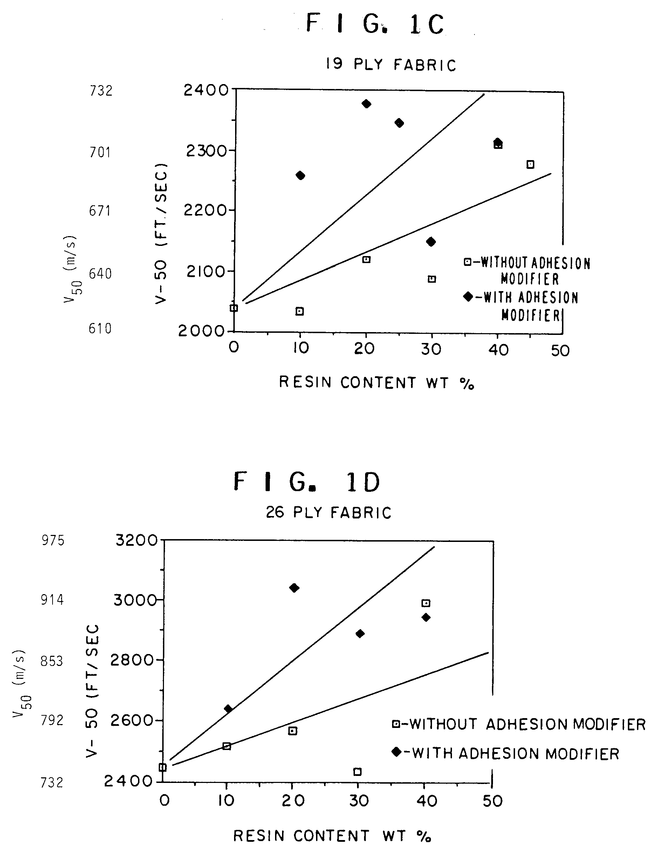

Fig.1 is a series of graphical representations of the relationship between ballistics limit ($V_{50}$) and Resin Content as a weight percent of rigid composites with several different areal densities, as denoted by the number of fabric plies in the composites. The relationships are shown for rigid composites, both, with adhesion modifier and without adhesion modifier.

## DETAILED DESCRIPTION OF THE INVENTION

This invention relates to continuous filament reinforced, rigid, composites. High tenacity, high modulus, p-aramid filaments are useful for such composites.

The term "aramid" is used to designate wholly aromatic polyamides. Not all aramid fibers are useful in the present invention. Only those derived from aromatic polyamides whose chain extending bonds are predominantly either coaxial or parallel and oppositely directed are preferred. Small amounts of aramid units who chain extending bonds are not oppositely directed, may be present; provided the filament tenacity and modulus are not unduly reduced, thereby. For example, up to 15% or perhaps slightly more of units with meta-oriented bonds may be present. High strength, high modulus aramid fibers useful in the present invention may be prepared by the processes described in U.S. Patents 3,767,756; 3,869,430; and 4,075,172. The fibers are characterized by filament tenacities of at least 15 gpd (13.2 dN/tex) and moduli of at least 400 gpd (354 dN/tex). These fibers will be referred to hereinafter as p-aramid fibers. Particularly preferred are p-aramid fibers based on poly(p-phenylene terephthalamide) as produced by E. I. du Pont de Nemours & Co. under the trademark Kevlar[R].

The matrix component of the composite of the invention is a polyester, phenolic, or polyamide resin. Such materials are well known in the art and, in the cured state, provide strong rigid structures. Among suitable polyester resins, there may be mentioned vinyl ester resins and ortho-polyester resins. Vinyl ester resins are the reaction products of an epoxy resin and an unsaturated aliphatic acid such as methacrylic or acrylic acid. Typically-used epoxy resins are of the diglycidyl ether/bisphenol-A type but may, also, be such components as epoxy novolac or halogenated epoxy.

Ortho polyesters are the reaction product of a glycol, an unsaturated aliphatic dibasic acid or its anhydride, and a saturated ortho aromatic acid or its anhydride. The glycol is usually propylene glycol but may be other glycols such as ethylene glycol, diethylene glycol, dipropylene glycol, and the like. The unsaturated dibasic acid or anhydride is usually maleic acid, fumaric acid, or maleic anhydride; but may be other similar acids or anhydrides. The ortho aromatic acid or anhydride is usually orthophthalic acid or orthophthalic anhydride but, of course, may be other saturated ortho aromatic acids and may be modified acids such as by being halogenated with chlorine.

Vinyl ester resins and orthophthalic and isophthalic polyester resins are generally cured by reaction with a monomer such as styrene or a substituted styrene such as vinyl toluene or alpha-methyl styrene; but other monomers may also be used such as methyl methacrylate, methyl acrylate, diallyl phthalate, triallyl cyanurate, and the like.

Phenolic resins can be of the resole type or the novolac type. Generally, the resole type is used in this invention. The phenolic resins are generally made from the reaction between a phenol and an aldehyde. Formaldehyde is usually used but, as is well-known, other aldehydes could also be suitable. Phenol is usually used but other suitable phenols include resorcinol and ring-substituted phenols such as ortho-, meta-, or para-cresol, bisphenol A, p-t-butyl phenol, p-phenylphenol, and the like.

Polyamide resins may, also, be used as the matrix component of the composite of this invention. Such polyamide resins must be melt-processable, preferably at below 350 C. Many types of such resins are useful, including aliphatic, cycloaliphatic and aliphatic-aromatic polyamides. These include 6,6 nylon; 6 nylon; 6,10 nylon; 6,12 nylon; polyamide from 4,4'-bis(aminocyclohexyl) methane and dodecanedioic acid; poly(hexamethylene terephthalamide); poly(hexamethylene isophthalamide); and the like. Copolymers of the above polyamides are also useful.

The composite of the present invention demonstrates its improved ballistics qualities by the use of filaments which, before embedment, have been coated with an adhesion modifier. The composite of this invention requires that coating and it is the use of that coating, in combination with other elements of the composite, which defines the invention. The function of the coating of adhesion modifier is to reduce the adhesion level between the p-aramid filaments and the resin matrix as discussed in greater detail below. From about 0.2 to about 5 percent, by weight, of such adhesion modifier is applied to the filaments to achieve the desired ballistics results at areal densities of this invention. Less than about 0.2 percent of the modifier provides inadequate results and more than about 5 percent does not appear to provide significant additional improvement.

The adhesion modifier may be applied in any of a variety of ways to provide even distribution on the surface of the filaments. For example, it may be dissolved in a solvent, applied to the filaments and the solvent driven off, or it may be dispersed in a carrier (for example, water) and applied to the filaments, or it may be applied directly in the absence of other ingredients. One of the more common ways of application is from a dispersion of the adhesion modifier in water. In a generally useful way of preparing such a dispersion, the adhesion modifier is melted or dissolved in an organic solvent (for example, methylisobutyl ketone) and mixed with an aqueous solution of a dispersing agent, yielding a two-phase mixture. The mixture is then agitated under high shear conditions to yield a dispersion. The organic solvent is stripped off by distillation under vacuum to leave the desired aqueous dispersion. Suitable dispersing agents are sodium dodecylbenzenesulfonate and octadecyl trimethylammonium chloride. Of course, other dispersing agents can be used and a variety of such products are commercially available under trademarks such as "Armeen" 14D and 18D, "Merpol" OJS and HCS, and "Arquad" 1250.

The adhesion modifier may be characterized as a solid which is not readily absorbed or dissolved in the filaments or resin. As a solid it will have less tendency to migrate during preparation of the composite or in use. It is important that the modifier reduce the adhesion between fiber and matrix to limit loading on the fiber which tends to prevent maximum utilization of ultimate fiber strength.

With the composites under consideration it has been found that the desirable ballistics qualities are achieved at the low modifier add-on level specified, that is, from about 0.2 to 5 percent, by weight. At areal densities of about 1.95 - 29.3 kg/m$^2$ (0.4 to 6 pounds per square foot), the preferred level of modifier is from about 1 to 2 percent, by weight.

Ballistics limit ($V_{50}$) is defined as the velocity at which a projectile of specified weight and dimensions has a 50 percent probability of penetrating a rigid composite under the conditions of a ballistics test which is identified as MIL-STD-662D, Ballistic Test for Armor (19 March 1984). For composites having an areal density less than 19.5 kg/m$^2$ (4.0 pounds per square foot), a 1.1 g (17 grain) projectile has been used in practice of this invention. For composites having an areal density greater than 19.5 kg/m$^2$ (4.0 pounds per square foot), a 2.8 g (44 grain) projectile is suggested. The projectile configuration has been defined in MIL-P-46593.

3

Areal density is defined as the weight per unit area of a rigid composite under test.

The ballistics test, MIL-STD-662D, involves propelling test projectiles at varying, known, velocities against samples of rigid composite until the velocity is determined at which a test projectile would have a 50 percent probability of penetrating the rigid composite.

One advantage of obtaining the desired adhesion at low add-on levels is that there is overall weight reduction of the composite as compared with those amounts of silicone materials reported in the art. Another advantage is that low add-on permits a greater concentration of filaments based on the weight of the composite.

Two groups of surface modifiers for p-aramid filaments useful for this invention are certain fluorochemicals and paraffin waxes, and combinations thereof. The fluorochemicals may be described as 2-perfluoroalkylethyl esters where the 2-perfluoroalkylethyl group has the structure $C_nF_{2n+1}(CH_2)_2-$ and $n = 5-11$. Esters which are useful are those of methacrylic acid in polymeric form, citric acid urethane, and phosphoric acid or its ammonium salts, and the like. Esters of this type are shown, among other places, in U.S. Patents 3,282,905 and 3,378,609. The esters may be applied in combination with coupling agents such as other acrylic, methacrylic and/or acrylamide polymers to promote pickup and dispersion of the fluorochemical on the p-aramid filaments. The paraffin waxes are solids derived from petroleum with melting points above room temperature. A paraffin wax with a melting point of about 60 C is generally preferred. The paraffin waxes may be applied with coupling agents such as a behenic acid ester derivative of melamine in order to promote the pickup and dispersion of the wax on the p-aramid filaments. A combination of fluorochemical and paraffin wax is the preferred surface modifier for practice of this invention.

The present invention is particularly useful in ballistics composites of the areal densities of this invention. Such composites can tolerate ballistic impact and prevent projectile penetration better if the reinforcing filaments have been coated in accordance with this invention prior to being incorporated in the resin matrix than when uncoated filaments have been used. Use of these coatings also avoids the problems associated with application of liquid silicone release agents as used in the art. The latter tend to coat filaments unevenly and require extensive drying or curing periods, and are messy to use. They are generally employed in large amounts, that is, 5 to 9 percent, by weight, (see Mumford et al., supra), thus adding undesirable weight to the composite. It is also understood that the frictional qualities of such silicone coated yarn would discourage use of such yarn in rigid composites.

Use of the coated aramid filaments of this invention permits the manufacture of extremely light, highly effective composites when compared with composites of the prior art utilizing glass fiber. The density of the aramid filaments is about 1.45 g/cc while the density of glass fibers is about 2.5 g/cc. Therefore, a smaller weight of aramid filaments than glass fibers is needed to provide equivalent ballistics results, thus, permitting lighter composites when the composites are made in accordance with this invention.

It will be understood that the examples below are believed to be representative of the present invention. Further, a change in the amount of add-on or operation outside the specified areal density range might result in ballistics limits outside the scope of the invention.

EXAMPLE 1

This example includes manufacture of the rigid composite of this invention and comparative ballistics testing of that composite against the composite which results from using no adhesion modifier. The fabric used for this example was a fabric made from poly(p-phenylene terephthalamide) fiber sold by E. I. du Pont de Nemours & Co. under the trademark designation Kevlar[R] 29 and identified as Style 710. Style 710 fabric is a plain weave fabric made from 1670 decitex (1500 denier) continuous fibers at a nominal yarn count of 24 by 24 ends and picks per inch (9.4 x 9.4 per centimeter) and a nominal basis weight of 9.6 oz/square yard (326 g/square meter).

The fabric was open-width (jig) scoured to remove yarn finish and warp size. The scouring was done in water having 1 g/liter of a surface active agent; and the temperature of the water was raised from 100 F (38 C) to 200 F (93 C) in 20 F (11 C) increments. The fabric was passed twice through the water at each temperature increment for a total of 12 passes. The surface active agent used in this case was "Merpol" HCS sold by E. I. du Pont de Nemours & Co. The fabric was rinsed with water, vacuum extracted and dried on a clip tenter frame at 250 F (121 C). The dried fabric was used, without further treatment in the comparative portion of this Example.

To prepare fabric for use in the composite of this invention, the scoured and dried fabric was dipped twice in baths containing a dispersion of the adhesion modifier (described below) at 100-110 F (38-43 C) and single-nipped through rubber rollers. The fabric was then dried and cured on a clip tenter frame at 380 F (193 C) for two minutes. The fabric so-treated was washed at 160 F (71 C) and thoroughly rinsed with water at 140 F (60 C). It was squeezed and dried at 325 F (163 C) for 5 minutes.

The adhesion modifier baths mentioned above contained the following in the form of an aqueous dispersion: (1) a fluorochemical mixture, as a dispersion, comprising two interpolymers and a surfactant. One interpolymer, comprising 1.8 percent, by weight, of the bath was derived from about 75% 2-perfluoroalkylethyl ester of methacrylic acid wherein the 2-perfluoroalkylethyl group had the formula, $C_nF_{2n+1}(CH_2)_2$-, and n had a value of from 5 to 11, about 25% 2-ethylhexyl methacrylate, about 0.25% N-methylolacrylamide and about 0.25% 2-hydroxyethyl-methacrylate. The second interpolymer, comprising 1.4%, by weight, of the bath was derived from about 97-98% of 2-ethylhexyl methacrylate, 2% N-methylol acrylamide and 0.1% ethylenedimethacrylate. The surfactant, 0.1 percent, by weight, of the bath, was the hydrochloride salt of ethoxylated stearyl amine. The interpolymers are disclosed in U.S. Patents 3,282,905 and 3,378,609. (2) a wax-melamine mixture, as a dispersion. The wax component, about 1.0 percent, by weight, of the bath, was a paraffin wax derived from petroleum with a melting point of about 60 C. The melamine component, comprising about 1 percent, by weight, of the bath, was a melamine derivative wherein each non-ring nitrogen contained one methoxymethylene group and one $-CH_2-O-CO-C_{21}H_{43}$ group.

The dispersant for the wax mixture was a combination of the acetate salts of "Armeen" DM-18D and DM-14D, sold by Armour Hess Chemicals Company. (3) About 0.1 percent, by weight, of an ethoxylated amine hydrochloride as a surfactant stabilizer. (4) About 3 percent, by weight, of isopropyl alcohol as a wetting agent. (5) About 92 percent, by weight water.

The surface-modified fabric contained about 0.8 percent, by weight, of the fluorochemical mixture and about 0.5 percent, by weight, of the wax-melamine mixture.

To make rigid composite plies, the fabric was cut into rectangular pieces about 12 x 15 inches (30.5 x 38 cm) and, as described hereinafter, each piece was sprayed with a solution of the matrix resin. The matrix resin was an ortho polyester sold by Reichhold Chemicals, Inc., White Plains, N.Y. 10603 and identified as "Polylite" Resin 33-072. One percent, by weight, of methylethylketone peroxide was used as curing accelerator and the resin was diluted with 20 percent, by weight, of acetone to obtain a suitable solution viscosity for spraying.

A layup of plies to form a rigid composite test sheet was made by stacking materials in the following sequence: A bottom plate of 1/4 inch (6.4 mm) thick aluminum; a polyester film release sheet; individual layers of fabric sprayed by the amount of matrix resin solution which will result in a composite which is about 40 percent, by weight, resin; a polyester film release sheet; and a top plate of 1/4 inch (6.4 mm) thick aluminum. The layup was placed in a press where a pressure of 18,000 pounds/square inch (124 MPa) was applied. The layup, under maintained pressure, was heated to about 108 C. The temperature and pressure were maintained for one hour. It was then cooled to about 28 C and removed from the press. The aluminum top and bottom plates were removed and the composite was trimmed for testing. The number of plies in each composite sample is shown in the Table 1.

Ballistics tests of the rigid composite samples were conducted in accordance with MIL-STD-662D as follows: A layup to be tested was placed in a sample mount to hold the layup rigid and perpendicular to the path of test projectiles. The projectiles were 1.1 g (17-grain) fragment simulating projectiles (MIL-P-46593) and were propelled from a test weapon capable of firing the projectiles at different velocities. The first firing for each layup was for a projectile velocity estimated to be the likely ballistics limit ($V_{50}$). When the first firing yielded a complete layup penetration, the next firing was for a projectile velocity of about 15 m/s (50 feet per second) less in order to obtain a partial penetration of the layup. On the other hand, when the first firing yielded no penetration or partial penetration, the next firing was for a velocity of about 15 m/s (50 feet per second) more in order to obtain a complete penetration. After obtaining one partial and one complete projectile penetration, subsequent velocity increases or decreases of about 15 m/s (50 feet per second) were used until enough firings were made to determine the ballistics limit ($V_{50}$) for that layup.

The ballistics limit ($V_{50}$) was calculated by finding the arithmetic mean of an equal number of at least three of the highest partial penetration impact velocities and the lowest complete penetration impact velocities, provided that there is not more than 38 m/s (125 feet per second) between the highest and lowest individual impact velocities.

The actual resin content of each rigid composite sample was calculated from the known weight of the fiber in the sample and the total weight of the sample. See Table 1.

The composite areal density was determined for each rigid composite sample by merely weighing a sample of known surface area. As can be seen from Table 1, the ballistics limit ($V_{50}$) was significantly improved for each rigid composite sample in which the p-aramid reinforcement was coated with an adhesion modifier.

EP 0 323 541 B1

TABLE 1

| Adhesion Modifier | Number of plies | Actual Resin % | Compos. Areal Density | | Ballist. limit $V_{50}$ | | % Improvement |
|---|---|---|---|---|---|---|---|
| | | | (kg/m$^2$) | (lb/ft$^2$) | (m/s) | (ft/sec) | |
| No | 10 | 32.7 | 4.83 | (0.99) | 351 | (1153) | 16.0 |
| Yes | 10 | 38.3 | 5.27 | (1.08) | 408 | (1338) | |
| No | 15 | 40.1 | 8.15 | (1.67) | 452 | (1482) | 18.5 |
| Yes | 15 | 39.0 | 8.01 | (1.64) | 535 | (1756) | |
| No | 20 | 39.9 | 10.84 | (2.22) | 554 | (1816) | 17.5 |
| Yes | 20 | 44.4 | 11.72 | (2.40) | 650 | (2134) | |
| No | 30 | 39.4 | 16.11 | (3.30) | 707 | (2320) | 5.6 |
| Yes | 30 | 37.5 | 15.62 | (3.20) | 747 | (2450) | |

EXAMPLE 2

This example describes the preparation of additional rigid composite articles of this invention along with comparative composites prepared without the use of adhesion modifiers.

The fabric used for this example was a fabric of poly(p-phenylene terephthalamide) fiber sold by E. I. du Pont de Nemours & Co. under the trademark designation Kevlar[R] 29 and identified as Style 735. Style 735 fabric is a 2x2 basket weave construction with nominally 13.8 x 13.4/cm (35 picks and 34 ends) of 1670 d/tex (1500 denier) yarn and a basis weight of nominally 475 g/m$^2$ (14 oz/square yard).

The fabric was scoured using the same procedure as was used in Example 1; and was coated using the same procedure and the same kind of solid adhesion modifier as was used in Example 1. Nominal resin content was varied from about 10 to about 45 percent, by weight, based on weight of the fabric. Control fabric was, also, prepared in the same manner as was used in Example 1.

A series of Example (With Adhesion Modifier) and Comparative (Without Adhesion Modifier) rigid composite test sheets were prepared as described in Example 1 by varying the number of fabric plies and the resin content. There was a series of test sheets prepared using each of 5, 9, 19, and 26 plies of fabric. A total of 19 Example sheets and 25 Comparative sheets were so-prepared and tested.

Ballistics testing was performed and ballistics limits ($V_{50}$) were determined for the sheets in each series as in Example 1. Ballistics results are tabulated in Table II and displayed graphically in Fig. 1 for each of the series. Although there is the expected scatter in the test results, it is apparent that the ballistics limits of the rigid composites containing p-aramid fabric with an adhesion modifier are higher than the ballistics limits of the composites without an adhesion modifier over the entire range of resin content studied (10-45 percent, by weight of fabric).

## TABLE II

| # OF PLIES | WITH ADHESION MODIFIER | | | | | WITHOUT ADHESION MODIFIER | | | | |
|---|---|---|---|---|---|---|---|---|---|---|
| | RESIN % | COMPOSITE AREAL DENSITY (LB/FT$^2$) | (KG/M$^2$) | BALLISTIC LIMIT V50 (FT/SEC) | (M/S) | RESIN % | COMPOSITE AREAL DENSITY (LB/FT$^2$) | (KG/M2) | BALLITIC LIMIT V50 (FT/SEC) | (M/S) |
| 5 | 14.2 | 0.56 | 2.73 | 1249 | 381 | 12.5 | 0.56 | 2.73 | 1209 | 369 |
| | 16.3 | 0.58 | 2.83 | 1251 | 381 | 17.9 | 0.57 | 2.78 | 1199 | 365 |
| | - | - | | - | | 18.7 | 0.57 | 2.78 | 1139 | 347 |
| | - | - | | - | | 19.5 | 0.58 | 2.83 | 1183 | 361 |
| | - | - | | - | | 18.5 | 0.57 | 2.78 | 1131 | 345 |
| | 24.1 | 0.62 | 3.03 | 1265 | 386 | 26.6 | 0.63 | 3.08 | 1091 | 333 |
| | 31.1 | 0.67 | 3.27 | 1110 | 338 | 29.7 | 0.66 | 3.22 | 1066 | 325 |
| | - | - | | - | | 31.1 | 0.67 | 3.27 | 1139 | 347 |
| | 41.9 | 0.80 | 3.91 | 1141 | 348 | 40.7 | 0.80 | 3.91 | 968 | 295 |
| 9 | 10.3 | 0.93 | 4.54 | 1526 | 465 | 11.4 | 0.97 | 4.74 | 1501 | 458 |
| | 19.1 | 1.02 | 4.98 | 1525 | 465 | 19.3 | 1.04 | 5.08 | 1417 | 432 |
| | - | - | | - | | 19.6 | 1.05 | 5.13 | 1404 | 428 |
| | - | - | | - | | 19.7 | 1.04 | 5.08 | 1401 | 427 |
| | - | - | | - | | 18.9 | 1.03 | 5.03 | 1455 | 443 |
| | 28.0 | 1.15 | 5.61 | 1482 | 452 | 32.6 | 1.26 | 6.15 | 1255 | 383 |
| | 39.3 | 1.41 | 6.88 | 1564 | 477 | 39.7 | 1.37 | 6.69 | 1247 | 380 |
| 19 | 8.0 | 1.92 | 9.37 | 2260 | 689 | 13.8 | 2.08 | 10.15 | 2035 | 620 |
| | 20.1 | 2.19 | 10.69 | 2377 | 725 | 20.3 | 2.23 | 10.89 | 2108 | 643 |
| | - | - | | - | | 19.8 | 2.37 | 11.57 | 2099 | 640 |
| | 23.9 | 2.31 | 11.28 | 2345 | 715 | 20.0 | 2.30 | 11.23 | 2153 | 656 |
| | 26.0 | 2.37 | 11.57 | 2149 | 655 | 29.8 | 2.61 | 12.74 | 2088 | 636 |
| | 35.2 | 2.72 | 13.28 | 2313 | 705 | 40.2 | 3.13 | 15.28 | 2368 | 722 |
| | - | - | | - | | 40.2 | 2.98 | 14.55 | 2253 | 687 |
| | - | - | | - | | 44.2 | 3.13 | 15.28 | 2278 | 694 |
| 26 | 10.4 | 2.80 | 13.67 | 2643 | 806 | 12.5 | 2.84 | 13.86 | 2522 | 769 |
| | 23.7 | 3.12 | 15.23 | 3045 | 928 | 21.3 | 3.12 | 15.23 | 2572 | 784 |
| | 24.0 | 3.17 | 15.48 | 2897 | 883 | 28.1 | 3.41 | 16.65 | 2433 | 742 |
| | 34.6 | 3.70 | 18.06 | 2944 | 897 | 39.0 | 4.14 | 20.21 | 2992 | 912 |
| | - | - | | - | | 40.4 | 4.05 | 19.77 | 2999 | 914 |

## Claims

1. A rigid composite comprising a polyester, phenolic, or polyamide resin matrix reinforced with continuous p-aramid filaments having a tenacity of at least 13.2 dN/tex, a modulus of at least 354 dN/tex, and coated with from about 0.2 to 5 percent, by weight, of a solid adhesion modifier to reduce the adhesion level between the resin matrix and the filaments, said coated filaments when embedded in the matrix and tested in accordance with MIL-STD-662D exhibiting a ballistics limit from about 305 to 1220 m/s (1000 to 4000 feet per second) and a composite areal density from about 1.95 to 29.3 kg/m$^2$ (0.4 to 6 pounds per square foot).

2. A composite according to Claim 1 wherein the filaments comprise from 50 to 90 percent, by weight, of the composite.

3. A composite according to Claim 1 wherein the adhesion modifier comprises a 2-perfluoroalkylethyl ester.

4. A composite according to Claim 1 wherein the adhesion modifier comprises a paraffin wax.

**5.** A composite according to Claim 1 wherein the adhesion modifier comprises a combination of 2-perfluoroalkylethyl ester and a paraffin wax.

**6.** A composite according to Claim 1 wherein the continuous p-aramid filaments are in the form of a woven fabric.

**7.** A composite according to Claim 1 in the form of ballistics composites.

**Patentansprüche**

**1.** Starres Verbundmaterial, das umfaßt eine Polyester-, Phenol- oder Polyamidharzmatrix, verstärkt mit kontinuierlichen p-Aramid-Filamenten mit einer Zugfestigkeit von mindestens 13,2 dN/tex, einem Modul von mindesten 354 dN/tex und beschichtet mit etwa 0,2 bis 5 Prozent, pro Gewicht, eines festen Adhäsions-Modifikationsmittels, um die Stärke der Adhäsion zwischen der Harzmatrix und den Filamenten zu reduzieren, wobei die beschichteten Filamente, wenn in der Matrix eingebettet und gemäß MIL-STD-662D getestet, eine ballistische Grenze von etwa 305 bis 1220 m/s (1000 bis 4000 Fuß pro Sekunde) und eine Verbundflächendichte von etwa 1,95 bis 29,3 kg/m$^2$ (0,4 bis 6 Pfund pro Quadratfuß) aufweisen.

**2.** Verbundmaterial nach Anspruch 1, worin die Filamente von 50 bis 90 Prozent, pro Gewicht, des Verbundmaterials umfassen.

**3.** Verbundmaterial nach Anspruch 1, worin das Adhäsions-Modifikationsmittel einen 2-Perfluoralkylethylester umfaßt.

**4.** Verbundmaterial nach Anspruch 1, worin das Adhäsion-Modifikationsmittel ein Paraffinwachs umfaßt.

**5.** Verbundmaterial nach Anspruch 1, worin das Adhäsions-Modifikationsmittel eine Kombination aus einem 2-Perfluoralkylethylester und einem Paraffinwachs umfaßt.

**6.** Verbundmaterial nach Anspruch 1, worin die kontinuierlichen p-Aramid-Filamente in der Form eines gewebten Stoffes vorliegen.

**7.** Verbundmaterial nach Anspruch 1 in der Form von ballistischen Verbundmaterialien.

**Revendications**

**1.** Un composite rigide comprenant une matrice de résine polyester, phénolique ou polyamide renforcée par des filaments continus de *p*-aramide ayant une ténacité d'au moins 13,2 dN/tex, un module d'au moins 354 dN/tex et revêtus d'environ 0,2 à 5 pour cent en poids d'un modificateur d'adhérence solide pour réduire le degré d'adhérence entre la matrice de résine et les filaments, lesdits filaments revêtus, lorsqu'ils sont noyés dans la matrice et mis à l'essai selon la spécification MIL-STD-662D, présentant une limite balistique d'environ 305 à 1220 m/s (1000 à 4000 feet par seconde) et une masse surfacique de composite d'environ 1,95 à 29,3 kg/m$^2$ (0,4 à 6 pounds par square foot).

**2.** Un composite selon la revendication 1, dans lequel les filaments constituent 50 à 90 pour cent en poids du composite.

**3.** Un composite selon la revendication 1, dans lequel le modificateur d'adhérence comprend un ester de 2-perfluoroalkyléthyle.

**4.** Un composite selon la revendication 1, dans lequel le modificateur d'adhérence comprend une cire paraffinique.

**5.** Un composite selon la revendication 1, dans lequel le modificateur d'adhérence comprend une combinaison d'ester de 2-perfluoroalkyléthyle et d'une cire paraffinique.

**6.** Un composite selon la revendication 1, dans lequel les filaments continus de *p*-aramide sont sous la forme d'une étoffe tissée.

**7.** Un composite selon la revendication 1, sous la forme de composites balistiques.

# F I G. 1A

# F I G. 1B

# F I G. 1C

## 19 PLY FABRIC

# F I G. 1D

## 26 PLY FABRIC

11